# NEUE EUROPÄISCHE PATENTSCHRIFT

(11) **EP 0 316 559 B2**
(45) Veröffentlichungstag und Bekanntmachung des Hinweises auf die Entscheidung über den Einspruch: **02.12.1998**
(45) Hinweis auf die Patenterteilung: 04.08.1993
(21) Anmeldenummer: 88116369.5
(22) Anmeldetag: 04.10.1988
(51) Int. Cl.: A01D 75/20, A01D 78/10

(54) **Schutzvorrichtung für Kreiselheumaschinen**
Protective device for rotary tedder
Appareil protecteur pour faneuse rotative

(30) Priorität: 19.11.1987 DE 3739114
(43) Veröffentlichungstag der Anmeldung: 24.05.1989
(73) Patentinhaber: CLAAS SAULGAU GMBH, D-88340 Saulgau (DE)
(72) Erfinder: Deni, Franz, D-7968 Saulgau-Bogenweiler (DE)

(56) Entgegenhaltungen:
- EP-A- 0 083 460
- EP-A- 0 310 532
- DE-A- 1 482 104
- FR-A- 2 063 497

## Beschreibung

Die Erfindung bezieht sich auf eine Schutzvorrichtung für Kreiselheumaschinen nach dem Oberbegriff des Anspruches 1. Eine Schutzvorrichtung dieser Art ist zum Beispiel in der Europäischen Patentanmeldung 00 83 460 dargestellt und beschrieben. Bei der bekannten Ausführung werden die im Betrieb umlaufenden Zinkenträger von vorn und die in der Transportstellung stillstehenden Zinkenspitzen ebenfalls von vorn abgedeckt. Der dafür aufwendige Bauaufwand ist aber erheblich. Außerdem ist der Schutz für die Kreise unvollständig. Ein wesentlicher Nachteil besteht ferner darin, daß der Schutzbügel in der Transportstellung von einem entgegenkommenden Fußgänger, Fahrzeug oder einem feststehenden Hindernis enfaßt werden und dadurch entgegen der Wirkung einer Feder weiter als beabsichtigt in den Verkehrsraum hinein verschwenkt werden kann, was zu Unfällen führen kann.

In der DE-OS 14 82 104 ist eine Schutzvorrichtung an einer Kreiselheumaschine mit beidendig an einem Hauptrahmen hochschwenkbaren Zinkenkreisein (Figur 5) beschrieben, die den Gefahrenbereich der Maschine in Arbeitsstellung abdeckt, in hochgeschwenkter Transportstellung der äußeren Zinkenkreisel jedoch keine Schutzwirkung hat. Als Schutzvorrichtung dienen in Arbeitsstellung der Maschine vor und hinter den Zinkenkreiseln verlaufende Gliederketten, die an halbkreisförmigen, mit den Rahmen der äußeren Zinkenkreisel verbundenen Schutzbügen eingehängt sind. In der hochgeschwenkten Transportstellung der äußeren Zinkenkreisel ragen die Zinken ohne Schutzabdeckung durch die halbkreisförmigen Schutzbügel frei seitlich nach außen und die Gliederketten hängen ohne Schutzwirkung lose nach unten. Es gibt hier also keine Schutzbügel, die den Gefahrenbereich der Zinkenkreisel sowohl in Arbeits- als auch in Transportstellung der Maschine abdecken.

Alle diese Nachteile können mit einer Ausführung nach der Erfindung vermieden werden.

Durch Maßnahmen, die im Anspruch 1 (Fassung A) offenbart sind, wird auf eine einfache und kostensparende Weise erreicht, daß die Kreisel sowohl in der Arbeit, als auch beim Transport von vorn, wie auch von hinten geschützt sind, und daß die hochgeklappten Kreise an keiner Stelle über die Schutzvorrichtung hinaus in den Verkehrsraum hineinragen. Darüberhinaus haben die Schutzvorrichtungen durch ihre in Fahrtrichtung liegenden Achsen eine feste Abstützung zum Maschinengestell, wodurch erhebliche Kräfte in oder gegen die Fahrtrichtung aufgenommen werden können.

Durch die im Anspruch 2 (Fassung A) offenbarten Maßnahmen wird erreicht, daß das Verschwenken der Schutzvorrichtungen in die Transportstellung selbsttätig erfolgt und das Verschwenken in die Arbeitsstellung durch die abgeklappten Kreisel zwangsweise bewirkt wird.

In der älteren, gegenüber diesem Anmeldungsgegenstand nicht vorveröffentlichten Euro-Patentanmeldung 0310532 ist eine Schutzvorrichtung für Kreiselheumaschinen entsprechend dem Oberbegriff des Anspruches 1 (Fassung B) beschrieben, bei der verschwenkbare Schutzvorrichtungen - in Fahrtrichtung gesehen - vor und hinter den hochldappbaren Zinkenkreiseln angeordnet und um in Fahrtrichtung und außerhalb der Schwenkachsen für die hochklappbaren Kreise liegende Achsen so nach oben und unten verschwenkbar sind, daß sie in der Arbeit die umlaufenden Zinkenträger der Zinkenkreisel und beim Transport die Zinkenspitzen abdecken. Gegenüber diesem älteren Vorschlag unterscheidet sich der Anmeldungsgegenstand entsprechend dem Kennzeichen des unabhängigen Anspruches 1 (Fassung B) dadurch, daß die Schutzvorrichtung durch Federkraft nach oben in eine etwa senkrechte Stellung und entgegen einer Federkraft durch Anschläge an den Tragarmen für die hochklappbaren Zinkenkreisel nach unten in eine etwa waagrechte Stellung schwenkbar sind.

Eine Vorteilhafte Ausbildung der Schutzvorrichtung erlaubt es, bei Kreiselheumaschinen mit 3-Punkt-Anbau am Schlepper ohne großen Mehraufwand Zusätzliche Stützen für die aus der Transportstellung abgebaute und abgestellte Maschine zu bekommen.

Nach einer weiteren Vorteilhaften Ausgestaltung der Erfindung sind an den schwenkbaren Schutzvorrichtungen elastisch oder gefedert ausweichbare Schutzklappen angebracht, die in der Transportstellung die Zinkenspitzen mindestens zum Teil von der Seite her abdecken.

Die Erfindung wird am Beispiel einer Kreiselheumaschine mit 6 Kreiseln erläutert, von denen auf jeder Seite 2 Kreisel zum Transport hochklappbar angelenkt sind.
Fig. 1 zeigt eine Maschine nach der Erfindung in einer Ansicht von oben, wobei 2 linke Kreisel nicht dargestellt sind. Ausgezogen ist die Transportstellung gezeichnet, strich-punktiert die Arbeitsstellung.
Fig. 2 zeigt den gleichen Gegenstand in einer Ansicht von hinten.
Fig. 3 zeigt eine Schutzklappe vergrößert dargestellt in einer Ansicht in Richtung des Pfeiles A (Fig. 1).

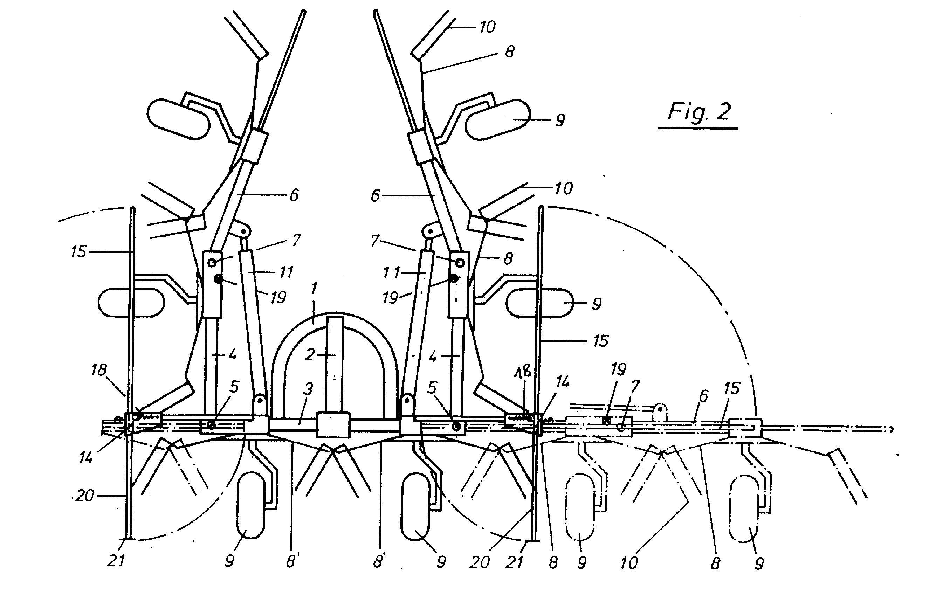

Ein U-förmiger Bügel (1) dient zum Anschluß der Kreiselheumaschine an das Dreipunktgestänge eines Schleppers. Von ihm führt ein Träger (2) zum Hauptrahmen (3) der Maschine. An dessen beiden Enden sind innere Tragarme (4) um Achsen (5) schwenkbar angelenkt. An den freien Enden der inneren Tragarme (4) sind äußere Tragarme (6) um Achsen (7) schwenkbar angelenkt. Die inneren Tragarme (4) und die äußeren Tragarme (6) tragen je einen Kreise (8) und ein Laufrad (9), während der Hauptrahmen (3) zwei Kreisel (8') und zwei Laufräder (9) trägt. Die Zinkenspitzen (10) der Kreisel (8, 8') sind in der Arbeitsstellung zum Boden hin gerichtet, während sie in der Transportstellung bei den hochklappbaren Kreiseln (8) nach außen gerichtet von der Maschine abstehen. Die inneren Tragarme (4) und die äußeren Tragarme (6) können mittels hydraulischer Hubzylinder (11) in die Transportstellung gehoben oder in die Arbeitsstellung abgesenkt werden (Fig. 2).

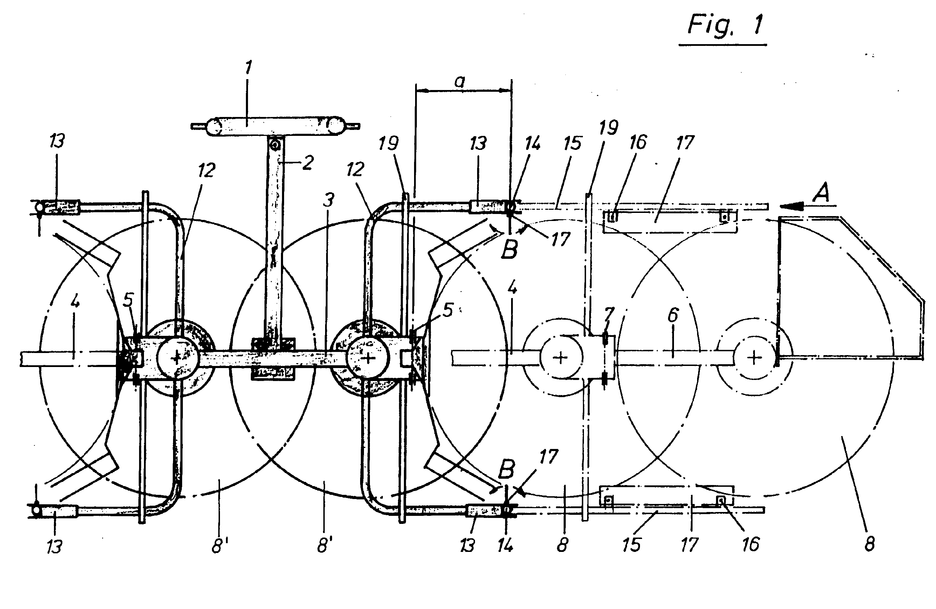

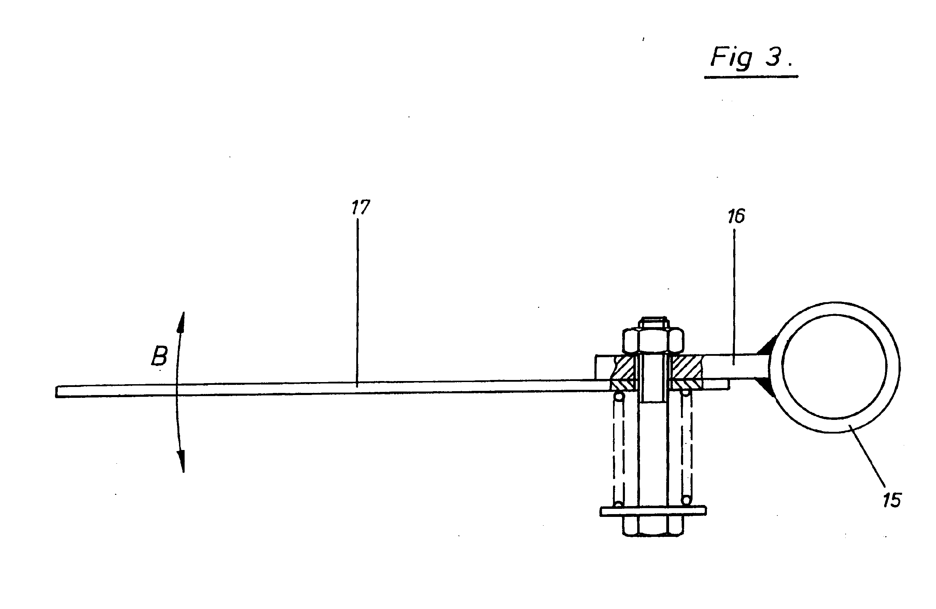

Am Hauptrahmen (3) sind U-förmige innere Schutzbügel (12) befestigt. Deren freie Enden (13) haben im Abstand a von den Achsen (5) in Fahrtrichtung zeigende Schwenkachsen (14). An diesen sind stabförmige Schutzvorrichtungen (15) gelagert. Die beiden stabförmigen Schutzvorrichtungen (15) können an ihren freien Enden auch durch einen nicht dargestellten Stab miteinander verbunden sein. Die stabförmigen Schutzvorrichtungen (15) besitzen Lappen (16), an denen Schutzklappen (17) gefedert befestigt sind, so daß sie im Sinne des Doppelpfeiles B ausweichen können (Fig. 1 und 3).

Zugfedern (18), die einerseits an den freien Enden (13) der inneren Schutzbügel (12) und andererseits an den stabförmigen Schutzvorrichtungen (15) befestigt sind, können diese bis in eine durch nicht dargestellte Anschläge begrenzte Senkrechtstellung hoch-ziehen.

An den inneren Tragarmen (4) sind sich in Fahrtrichtung erstrekkende Anschläge (19) befestigt, die in der Arbeitsstellung über den stabförmigen Schutzvorrichtungen (15) liegen und diese nach unten halten. Wenn die inneren und äußeren Tragarme (4, 6) nach oben geklappt werden, können sich die stabförmigen Schutzvorrichtungen (15) unter Wirkung der Federn (18) ebenfalls nach oben bewegen, bis sie eine Senkrechtlage erreicht haben. Die Zinkenspitzen (10) müssen dabei an den Schutzklappen (17) vorbeistreichen, die dabei elastisch ausweichen können und danach die in Fig. 1 ausgezogene dargestellte Lage einnehmen. Die Zinkenspitzen sind jetzt durch die stabförmigen Schutzvorrichtungen (15) von vorn und hinten und durch die Schutzklappen (17) von der Seite abgedeckt. Dadurch ist dem Unfallschutz Genüge getan.

Die stabförmigen Schutzvorrichtungen (15) sind über ihre Schwenkachsen (14) hinaus durch einen freien Schenkel (20) mit einer Fußplatte (21) (Fig. 2) soweit verlängert, daß sie in der senkrechten Lage den Boden berühren und so die abgestellte Maschine zusätzlich stützen.

## Patentansprüche (Patentansprüche für folgende(n) Vertragsstaat(en) : BE, CH, LI, SE)

1. Schutzvorrichtung für Kreiselheumaschinen mit mindestens 4 Kreisein (8), von denen mindestens 2 zum Transport der Maschine um beidseitig an einem Hauptrahmen (3) in Fahrtrichtung liegende Achsen (5) hochgeklappt werden können und verschwenkbaren Schutzvorrichtungen (15) für die Kreisel (8), die in der Arbeit die umlaufenden Zinkenträger und beim Transport die Zinkenspitzen (10) abdecken, dadurch aekennzeichnet, daß die Schutzvorrichtungen (15) an den freien Enden (13) von mit dem Hauptrahmen (3) verbundenen und in Fahrtrichtung gesehen vor und hinter den Kreiseln (8') am Hauptrahmen (3) nach außen verlaufenden Schutzbügeln (12) gelagert und um in Fahrtrichtung und außerhalb der Schwenkachsen (5) für die hochklappbaren Kreisel (8) liegende Achsen (14) nach oben und unten verschwenkbar sind.

2. Schutzvorrichtung nach Anspruch 1, dadurch gekennzeichnet, daß die schwenkbaren Schutzvorrichtungen (15) durch Federkraft nach oben in eine etwa senkrechte Stellung schwenkbar sind und entgegen einer Federkraft durch Anschläge (19) an den Tragarmen (4) für die hochklappbaren Kreisel (8) nach unten in eine etwa waagrechte Stellung gedrückt werden.

3. Schutzvorrichtung nach den Ansprüchen 1 bis 2, dadurch gekennzeichnet, daß die Schutzvorrichtungen (15) über ihre in Fahrtrichtung liegende Achsen (14) hinaus so weit verlängert sind, daß ihre diesseitigen freien Enden (20, 21) als Stütze für die in der Transportstellung abgestellte Maschine dienen können.

4. Schutzvorrichtung nach einem der Ansprüche 1 bis 3, dadurch gekennzeichnet, daß an den schwenkbaren Schutzvorrichtungen (15) elastisch oder gefedert ausweichbare Schutzklappen (17) angebracht sind, die in der Transportstellung mindestens einen Teil der Zinkenspitzen (10) von der Seite her abdecken.

## Patentansprüche (Patentansprüche für folgende(n) Vertragsstaat(en) : AT, DE, FR, IT, NL)

1. Schutzvorrichtung für Kreiselheumaschinen mit mindestens 4 Zinkenkreiseln (8), von denen mindestens 2 zum Transport der Maschine um beidseitig an einem Hauptrahmen (3) in Fahrtrichtung liegende Achsen (5) hochgeklappt weren können und verschwenkbaren Schutzvorrichtungen (15), die an den freien Enden (13) von mit dem Hauptrahmen (3) verbundenen und in Fahrtrichtung gesehen vor und hinter den Kreiseln (8') am Hauptrahmen (3) nach außen verlaufenden Schutzbügeln (12) gelagert und um in Fahrtrichtung und außerhalb der Schwenkachsen (5) für die hochklappbaren Kreise (8) liegende Achsen (14) nach oben und unten verschwenkbar sind, wobei sie (15) in der Arbeit die umlaufenden Zinkenträger der Kreisel (8) und beim Transport die Zinkenspitzen (10) abdecken, dadurch gekennzeichnet, daß die Schutzvorrichtungen (15) durch Federkraft nach oben in eine etwa senkrechte Stellung schwenkbar sind und entgegen einer Federkraft durch Anschläge (19) an den Tragarmen (4) für die hochklappbaren Kreisel (8) nach unten in eine etwa waagrechte Stellung gedrückt werden.

2. Schutzvorrichtung nach dem Ansprüch 1, dadurch gekennzeichnet, daß die Schutzvorrichtungen (15) über ihre in Fahrtrichtung liegende Achsen (14) hinaus so weit verlängert sind, daß ihre diesseitigen freien Enden (20, 21) als Stütze für die in der Transportstellung abgestellte Maschine dienen können.

3. Schutzvorrichtung nach einem der Ansprüche 1 oder 2, dadurch gekennzeichnet, daß an den schwenkbaren Schutzvorrichtungen (15) elastisch oder gefedert ausweichbare Schutzklappen (17) angebracht sind, die in der Transportstellung mindestens einen Teil der Zinkenspitzen (10) von der Seite her abdecken.

## Claims (Claims for the following Contracting State(s) : BE, CH, LI, SE)

1. A protector arrangement for rotary hay making machines having at least four rotary members (8) of which at least two can be folded up about axes (5) which lie in the direction of travel on both sides on a main frame (3) for transportation of the machine, and pivotable protector arrangements (15) for the rotary members (8), which in operation cover the rotating tine bearers and in transportation cover the tine tips (10), characterised in that the protector arrangements (15) are mounted at the free ends (13) of protector yokes (12) which are connected to the main frame (3) and which extend outwardly on the main frame (3) in front of and behind the rotary members (8') as viewed in the direction of travel, and are pivotable upwardly and downwardly about axes (14) which lie in the direction of travel and outside the pivot axes (5) for the fold-up rotary members (8).

2. A protector arrangement according to claim 1 characterised in that the pivotable protector arrangements (15) are pivotable upwardly by spring force into a substantially perpendicular position and are urged downwardly into a substantially horizontal position against a spring force by stops (19) on the support arms (4) for the fold-up rotary members (8).

3. A protector arrangement according to claims 1 and 2 characterised in that the protector arrangements (15) are extended beyond their axes (14) which lie in the direction of travel to such an extent that their free ends (20, 21) at that side can serve as supports for the machine when it is set down in the transport position.

4. A protector arrangement according to one of claims 1 to 3 characterised in that mounted on the pivotable protector arrangements (15) are protector flaps (17) which can deflect resiliently or with a sprung action and which in the transport position cover at least a part of the tine tips (10) from the side.

## Claims (Claims for the following Contracting State(s) : AT, DE, FR, IT, NL)

1. A protector arrangement for rotary hay making machines having at least four rotary tine members (8) of which at least two can be folded up about axes (5) which lie in the direction of travel on both sides on a main frame (3) for transportation of the machine, and pivotable protector arrangements (15) which are mounted at the free ends (13) of protector yokes (12) which are connected to the main frame (3) and which extend outwardly on the main frame (3) in front of and behind the rotary members (8') as viewed in the direction of travel and are pivotable upwardly and downwardly about axes (14) which lie in the direction of travel and outside the pivot axes (5) for the fold-up rotary members (8), wherein in operation they (15) cover the rotating tine bearers of the rotary members (8) and in transportation they cover the tine tips (10), characterised in that the protector arrangements (15) are pivotable upwardly by spring force into a substantially perpendicular position and are urged downwardly into a substantially horizontal position against a spring force by stops (19) on the support arms (4) for the fold-up rotary members (8).

2. A protector arrangement according to claim 1 characterised in that the protector arrangements (15) are extended beyond their axes (14) which lie in the direction of travel to such an extent that their free ends (20, 21) at that side can serve as supports for the machine when it is set down in the transport position.

3. A protector arrangement according to one of claims 1 and 2 characterised in that mounted on the pivotable protector arrangements (15) are protector flaps (17) which can deflect resiliently or with a sprung action and which in the transport position cover at least a part of the tine tips (10) from the side.

## Revendications (Revendications pour l'(les) Etat(s) contractant(s) suivant(s) : BE, CH, LI, SE)

1. Dispositif protecteur pour faneuses rotatives, comprenant au moins quatre toupies (8), dont deux au moins peuvent être rabattues vers le haut pour le transport de la machine autour d'axes (5) orientés en direction de la marche, et des dispositifs protecteurs pivotants (15) destinés aux toupies (8), qui recouvrent pendant le travail les supports de dents rotatifs et pendant le transport les pointes des dents (10), caractérisé en ce que les dispositifs protecteurs (15), vus en direction de la marche, sont disposés à l'avant et à l'arrière des toupies (8) rabattables vers le haut et en ce qu'ils peuvent être pivotés vers le haut et vers le bas autour d'axes (14) orientés dans la direction de la marche, et situés à l'extérieur des axes de pivotement (5) destinés aux toupies (8) rabattables vers le haut.

2. Dispositif protecteur selon la revendication 1, caractérisé en ce que les dispositifs protecteurs pivotants (15) peuvent être pivotés par la force de ressorts vers le haut dans une position sensiblement verticale, et pressés à l'encontre de la force de ressorts vers le bas dans une position sensiblement horizontale contre des butées (19) prévues sur les bras de support (4) destinés aux toupies rabattables vers le haut (8).

3. Dispositif protecteur selon la revendication 1 ou 2, caractérisé en ce que les dispositifs protecteurs (15) sont prolongés au-delà de leurs axes (14) orientés dans la direction de la marche de façon que leurs extrémités libres (20, 21) situées de ce côté puissent servir d'appuis pour la machine quand elle est placée dans la position de transport.

4. Dispositif protecteur selon l'une des revendications 1 à 3, caractérisé en ce que des volets de protection (17) sont montés de façon à pouvoir être écartés élastiquement ou par des ressorts sur les dispositifs protecteurs pivotants (15), volets qui recouvrent dans la position de transport au moins une partie des pointes des dents (10) par le côté.

## Revendications (Revendications pour l'(les) Etat(s) contractant(s) suivant(s) : AT, DE, FR, IT, NL)

1. Dispositif protecteur pour faneuses rotatives comprenant au moins quatre toupies à dents (8), dont deux au moins peuvent, pour le transport de la machine, être rabattues vers le haut autour d'axes (5) orientés en direction de la marche et situés des deux côtés sur un châssis principal (3), et des dispositifs protecteurs (15) pouvant être pivotés, et dont les extrémités libres sont supportées par des étriers de protection (12) reliés au châssis principal (3) et qui, en direction de la marche, s'étendent vers l'extérieur à l'avant et à l'arrière des toupies (8') sur le châssis principal (3), ces dispositifs protecteurs pouvant être pivotés vers le haut et vers le bas autour d'axes (14) orientés en direction de la marche et situés à l'extérieur des axes de pivotement (5) destinés aux toupies (8) rabattables vers le haut, lesdits dispositifs (15) recouvrant pendant le travail les supports de dents rotatifs des toupies (8) et pendant le transport les pointes des dents (10), caractérisé en ce que les dispositifs protecteurs (15) peuvent être pivotés vers le haut par la force de ressorts dans une position sensiblement verticale et sont pressés vers le bas dans une position sensiblement horizontale à l'encontre de la force de ressorts par des butées (19) prévues sur les bras de support (4) destinés aux toupies (8) rabattables vers le haut.

2. Dispositif protecteur selon la revendication 1, caractérisé en ce que les dispositifs protecteurs (15) sont prolongés au-delà de leurs axes (14) qui sont orientés dans la direction de la marche de manière que leurs extrémités libres (20, 21) situées de ce côté puissent servir d'appuis pour la machine quand elle est placée en position de transport.

3. Dispositif protecteur selon l'une des revendications 1 ou 2, caractérisé en ce que des volets protecteurs pivotants (17) pouvant être écartés élastiquement ou par des ressorts sont montés sur les dispositifs protecteurs pivotants (15), volets qui recouvrent par le côté, dans la position de transport, au moins une partie des pointes des dents (10).
